# EUROPÄISCHE PATENTANMELDUNG

(11) **EP 1 804 049 A2**
(43) Veröffentlichungstag der Anmeldung: **04.07.2007**
(21) Anmeldenummer: 06123262.5
(22) Anmeldetag: 31.10.2006
(51) Int. Cl.: G01N 11/04

(54) **Vorrichtung zur Bestimmung der Viskosität von Flüssigkeiten**

(30) Priorität: 28.12.2005 DE 102005062718
(71) Anmelder: ROBERT BOSCH GMBH, 70442 Stuttgart (DE)
(72) Erfinder: Brinz, Thomas, 73266, Bissingen A.D. Teck (DE); Lewis, Jane, SA43 2SE, Wales (DE); Tiefenbacher, Markus, 70736, Fellbach-Schmiden (DE); Geiger, Thomas, 72141, Walddorfhaeslach (DE); Burk, Tobias, 72070, Tuebingen (DE)

(57) **Zusammenfassung**

Die Erfindung betrifft Vorrichtung (1) zur Bestimmung der Viskosität von Flüssigkeiten (16), wobei die Vorrichtung (1) eine Spritze (2) umfasst, welche einen Kolben (5) und einen Hohlzylinder (3) mit Düse (4)aufweist, wobei die Vorrichtung (1) eine Kanüle (14) umfasst und wobei die Vorrichtung (1) eine Vorschubeinrichtung (7) umfasst, mittels welcher der Kolben (5) mit einer gleichbleibenden Geschwindigkeit verschiebbar ist.

## Beschreibung

Die Erfindung betrifft eine Vorrichtung zur Bestimmung der Viskosität von Flüssigkeiten gemäß dem Oberbegriff des Anspruchs 1.

### Stand der Technik

Aus der DE 24 44 148 A1 ist eine Vorrichtung zur Bestimmung der Viskosität von Flüssigkeiten bekannt. Diese Vorrichtung umfasst neben einer Spritze, welche einen Kolben und einen Hohlzylinder mit Düse aufweist, eine Kanüle und eine Vorschubeinrichtung, mittels welcher der Kolben mit einer gleichbleibenden Geschwindigkeit verschiebbar ist. Zur Errechnung der Viskosität einer Flüssigkeit wird der Druck der zu messenden Flüssigkeit unmittelbar vor der Kanüle, durch welche die zu messende Flüssigkeit gepresst wird, mit einem Druckaufnehmer gemessen. Hierdurch ist ein direkter Kontakt des Druckmessers mit der zu messenden Flüssigkeit und ein dadurch erforderliches Reinigen des Druckmessers nach jeder Messung unvermeidbar.

### Aufgabe und Vorteile der Erfindung

Aufgabe der Erfindung ist es demgegenüber eine Vorrichtung zu Bestimmung der Viskosität von Flüssigkeiten vorzuschlagen, bei der eine Bestimmung der Viskosität ohne direkten Kontakt einer Messvorrichtung mit der zu messenden Flüssigkeit erfolgt.

Diese Aufgabe wird ausgehend von einer Vorrichtung zur Bestimmung der Viskosität von Flüssigkeiten der einleitend genannten Art durch die kennzeichnenden Merkmale des Anspruchs 1 gelöst.

Durch die in den Unteransprüchen genannten Maßnahmen sind vorteilhafte und zweckmäßige Ausführungen und Weiterbildungen der Erfindung möglich.

Dementsprechend zeichnet sich eine Vorrichtung zur Bestimmung der Viskosität von Flüssigkeiten dadurch aus, dass durch eine Kraftmesseinrichtung die von der Vorschubeinrichtung auf den Kolben wirkende Kraft messbar ist.

Durch die Verwendung einer Kraftmesseinrichtung zwischen dem Kolben und der Vorschubeinrichtung ist ohne direkten Kontakt der Messeinrichtung mit der zumessenden Flüssigkeit eine Kenngröße in Form einer Kraft ermittelbar, welche zusammen mit weiteren Kenngrößen und unter der Voraussetzung eines sich mit definierter Geschwindigkeit bewegenden Kolbens bzw. eines bekannten Volumenstroms, eine Errechnung der Viskosität der zu messenden Flüssigkeit erlaubt. Hierdurch entfällt das Reinigen einer Messeinrichtung, welche in direktem Kontakt mit der Flüssigkeit steht. Dies bringt einen erheblichen Zeitgewinn bezüglich der für eine Messung anzusetzenden Prozesszeit mit sich und vereinfacht den Aufbau halbautomatischer und vollautomatischer Vorrichtungen. Einen zusätzlichen Vorteil weist diese berührungsfreie Messung bei der Bestimmung der Viskosität von aggressiven Flüssigkeiten auf, da im Unterschied zu der bekannten Vorrichtung keine zusätzlichen Maßnahmen zum Schutz der Messeinrichtung vor der aggressiven Flüssigkeit ergriffen werden müssen.

Eine vorteilhafte Ausführungsform der Erfindung sieht vor, die Kanüle unter Vermeidung eines Zwischenstücks direkt auf die Düse des Hohlzylinders der Spritze aufzusetzen. Hierdurch kommen ausschließlich Einwegbauteile, nämlich Kolben, Hohlzylinder und Kanüle mit der zu messenden Flüssigkeit in Kontakt. Somit kann die Vorrichtung ohne irgendeine Reinigung sofort für eine weitere Bestimmung der Viskosität verwendet werden.

Erfindungsgemäß ist es vorgesehen, die Vorschubeinrichtung und den Kolben mittels einer Kupplung zu verbinden. Hierdurch ist es möglich die Spritze rasch und unkompliziert auszuwechseln.

Weiterhin ist es vorgesehen, die Vorrichtung mit einem elektronischen Speicher auszustatten, welcher dafür ausgelegt ist, die mit der Kraftmesseinrichtung ermittelte Kraft oder den mit der Kraftmesseinrichtung ermittelten Kraftverlauf zu speichern. Hierdurch kann die Vorrichtung zumindest teilweise unabhängig von einer die Messungen überwachenden Person und somit kostengünstig betrieben werden.

Ergänzend ist es vorgesehen, die Vorrichtung mit einer elektronischen Recheneinheit, einer Eingabeeinheit und einem Anzeigeeinheit auszustatten. Hierdurch ist eine weitgehende Automatisierung der Bestimmungen von Viskositäten und die Einbindung der Vorrichtung in ein Netzwerk möglich.

Weiterhin ist es möglich durch eine Ausstattung der Vorrichtung mit wenigstens einem Manipulator, durch welchen die Spritze und/oder die Kanüle in eine zu der Vorrichtung gehörende Halterung einsetzbar und/oder aus dieser herausnehmbar ist, eine vollautomatische Vorrichtung zur Bestimmung der Viskosität von Flüssigkeiten auszubilden, da lediglich die Spritze und die Kanüle zwischen einzelnen Messungen zu wechseln sind.

Die Erfindung sieht auch vor, die Vorrichtung in eine Anordnung zu integrieren. Hierdurch ist es möglich, die Vorrichtung in einer Produktions- und/oder Messstraße zu betreiben.

Weiterhin ist es vorgesehen, die Vorrichtung als Dosiervorrichtung zu verwenden. Mit einer derartigen Dosiervorrichtung kann gleichzeitig mit dem Dosiervorgang die Viskosität der zu dosierenden Flüssigkeit erfasst werden. Dies führt zu einer erheblichen Zeitersparnis und vermindert den maschinen- und messtechnischen Aufwand.

### Ausführungsbeispiel

Weitere Einzelheiten der Erfindung werden in der Zeichnung anhand eines schematisch dargestellten Ausführungsbeispiels und eines Diagramms beschrieben.

Hierbei zeigt:
- Figur 1:: eine schematische Ansicht einer erfindungsgemäßen Vorrichtung und
- Figur 2:: ein Diagramm.

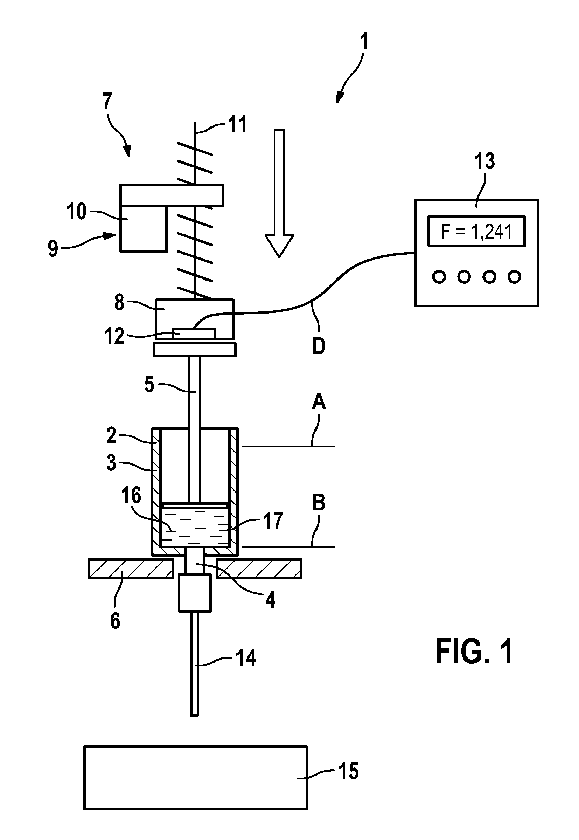

Die Figur 1 zeigt eine Vorrichtung 1. Die Vorrichtung 1 umfasst eine Spritze 2, welche einen Hohlzylinder 3 mit einer Düse 4 aufweist, wobei in dem Hohlzylinder 3 ein Kolben 5 geführt ist. Die Spritze 2 ist in einer schematisch dargestellten Halterung 6 lösbar gehalten. Weiterhin umfasst die Vorrichtung 1 eine Vorschubeinrichtung 7. Die Vorschubeinrichtung 7 setzt sich im wesentlichen aus einer schematisch dargestellten Kupplung 8, mittels welcher der Kolben 5 verfahrbar ist, und einem Antrieb 9 zusammen. Der Antrieb 9 ist dafür ausgelegt, den Kolben 5 über die Kupplung 8 mit einer konstanten Geschwindigkeit in eine Pfeilrichtung x zu bewegen. Der schematisch dargestellte Antrieb 9 umfasst hierzu einen Elektromotor 10 und eine Spindel 11. In der Kupplung 8 ist ein Sensor 12 einer Kraftmesseinrichtung 13 angeordnet, wobei mit der Kraftmesseinrichtung 13 eine Druckkraft bzw. Auspresskraft F erfassbar ist, mit welcher der Antrieb 9 mit der Spindel 11 über die Kupplung 8 auf den Kolben 5 wirkt. Der Sensor 12 übermittelt die erfassten Daten über eine Datenleitung D. Schließlich umfasst die Vorrichtung 1 noch eine Kanüle 14 und einen Auffangbehälter 15. Die Kanüle bzw. Einwegkapillare 14 ist auf die Düse 3 des Hohlzylinders 3 der Spritze 2 aufgesetzt. Während der Bewegung des Kolbens 5 aus einer Anfangsstellung A in eine Endstellung B durch den Antrieb 9 wird eine zu messende Flüssigkeit bzw. Flüssigkeitsprobe 16 mit einem konstanten Volumenstrom aus einem Innenraum 17 des Hohlzylinders 3 durch die Düse 4 und die Kanüle 14 in den Auffangbehälter 15 gepresst. Der Innenraum 17 der Spritze 2 hat vorzugsweise ein maximales Volumen von 2 ml bis 100 ml. Die Abmessungen der Düse 3 und der Kanüle 14 sind auf die zu messende Flüssigkeit und den Volumenstrom, mit welchem die Flüssigkeit ausgepresst wird angepasst.

Die Spritze 2 und die Kanüle 14 sind vorzugsweise als Einwegkomponenten der Vorrichtung 1 ausgebildet. Das heißt für jede Bestimmung der Viskosität findet eine neue Spritze und eine neue Kanüle Verwendung.

Gemäß einer nicht dargestellten Ausführungsvariante der Vorrichtung umfasst die Vorrichtung auch wenigstens einen Manipulator, durch welchen die Spritze und/oder die Kanüle austauschbar sind. Für die Kanüle kann selbstverständlich eine eigenständige Halterung vorgesehen sein.

Gemäß einer Ausführungsvariante zu der Figur 1 ist es vorgesehen, die Kraftmesseinrichtung zwischen der Halterung und dem Hohlzylinder anzuordnen. Bei einer derartigen Anordnung ist eine Belastung der Datenleitung der Messeinrichtung durch eine Bewegung des Kolbens vermieden.

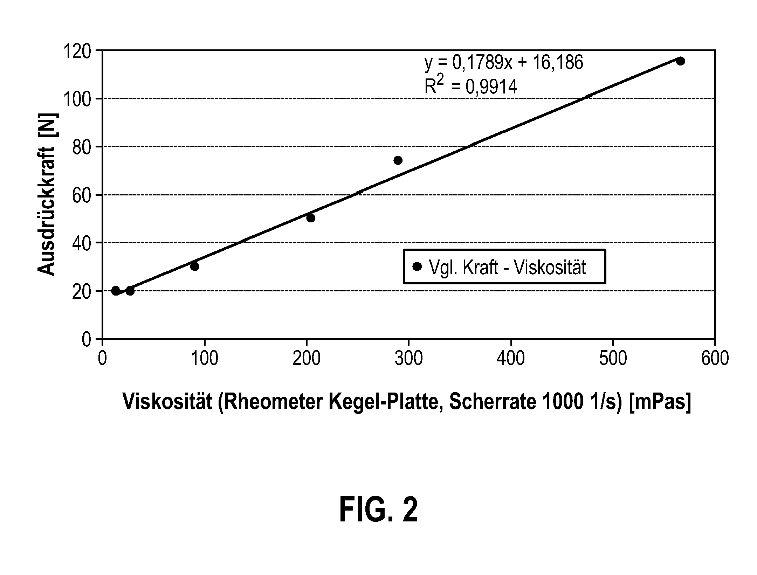

Die Figur 2 zeigt schließlich ein Diagramm, aus welchem in Abhängigkeit von einer gemessenen Ausdrückkraft F die Viskosität einer untersuchten Flüssigkeit ablesbar ist. Die Berechnungen basieren im wesentlichen auf folgenden Daten:

| | |
|---|---|
| Länge der Kanüle: | 1,5" |
| Durchmesser der Kanüle: | 1,33 mm |
| Volumenstrom beim Ausdrücken der Spritze: | 120 ml/min |

Zur Berechnung der Viskosität wurde auf das Hagen-Poiseuillesche Gesetz, sowie die Kanülendaten (Länge und Innendurchmesser), die gemessene Kraft und die Kolbenvorschubgeschwindigkeit zurückgegriffen. Die Druckdifferenz ist die Differenz aus dem Spitzeninnendruck, welcher aus der gemessenen Kraft errechnet werden kann, und dem Umgebungsdruck. Zur Erhöhung der Genauigkeit der Bestimmung der Viskosität von Flüssigkeiten mittels der Ausdrückkraft sieht die Erfindung vor, die gemessene Kraft bzw. den gemessenen Kraftverlauf um den Betrag der Reibung des Kolbens in dem Hohlzylinder der Spritze zu korrigieren.

Im vorliegenden Beispiel erfolgt die Messung der Ausdrückkraft in Newton und die Viskosität ist in m Pas angegeben.

Die Erfindung ist nicht auf dargestellte oder beschriebene Ausführungsbeispiele beschränkt. Sie umfasst vielmehr Weiterbildungen der Erfindung im Rahmen der Schutzrechtsansprüche. Insbesondere sieht die Erfindung vor, die Vorrichtung in Apparate für Dosier- und Applikationsprozesse zu integrieren, bei denen bereits Flüssigkeiten mit konstantem Volumenstrom ausgedrückt werden. Hierdurch ist der technische Aufwand für eine Bestimmung der Viskosität minimal.

## Patentansprüche

1. Vorrichtung (1) zur Bestimmung der Viskosität von Flüssigkeiten (16),
- wobei die Vorrichtung (1) eine Spritze (2) umfasst, welche einen Kolben (5) und einen Hohlzylinder (3) mit Düse (4)aufweist,
- wobei die Vorrichtung (1) eine Kanüle (14) umfasst und
- wobei die Vorrichtung (1) eine Vorschubeinrichtung (7) umfasst, mittels welcher der Kolben (5) mit einer gleichbleibenden Geschwindigkeit verschiebbar ist,
**dadurch gekennzeichnet,**
- **dass** die von der Vorschubeinrichtung (7) auf den Kolben wirkende Kraft (F) durch eine Kraftmesseinrichtung (13) messbar ist.

2. Vorrichtung nach Anspruch 1, **dadurch gekennzeichnet, dass** die Kanüle (14) unter Vermeidung eines Zwischenstücks direkt auf die Düse (4) des Hohlzylinders (3) der Spritze (2) aufsetzbar ist.

3. Vorrichtung nach einem der vorhergehenden Ansprüche, **dadurch gekennzeichnet, dass** die Vorschubeinrichtung (7) und der Kolben (5) durch eine Kupplung (8) verbindbar sind.

4. Vorrichtung nach einem der vorhergehenden Ansprüche, **dadurch gekennzeichnet, dass** die Vorrichtung (1) einen elektronischen Speicher umfasst, in welchem die mit der Kraftmesseinrichtung (13) ermittelte Kraft (F) oder der mit der Kraftmesseinrichtung (13) ermittelte Kraftverlauf speicherbar ist.

5. Vorrichtung nach einem der vorhergehenden Ansprüche, **dadurch gekennzeichnet, dass** die Vorrichtung (1) eine elektronische Recheneinheit, eine Eingabeeinheit und eine Anzeigeeinheit umfasst.

6. Vorrichtung nach einem der vorhergehenden Ansprüche, **dadurch gekennzeichnet, dass** die Vorrichtung (1) wenigstens einen Manipulator aufweist, durch welchen die Spritze (2) und/oder die Kanüle (14) in eine zu der Vorrichtung (1) gehörende Halterung (6) einsetzbar und/oder aus dieser herausnehmbar ist.

7. Vorrichtung nach einem der vorhergehenden Ansprüche, **dadurch gekennzeichnet, dass** die Vorrichtung (1) in eine Anordnung integrierbar ist.

8. Vorrichtung nach einem der vorhergehenden Ansprüche, **dadurch gekennzeichnet, dass** die Vorrichtung (1) als Dosiervorrichtung ausgebildet ist.
